# EUROPEAN PATENT APPLICATION

(11) **EP 4 443 047 A1**
(43) Date of publication of application: **09.10.2024**
(21) Application number: 21966312.7
(22) Date of filing: 30.11.2021
(51) Int. Cl.: F21V 8/00, F21V 3/02

(54) **LAMP COVER, LIGHTING DEVICE, AND STORAGE BOX**

(71) Applicant: Sharp Kabushiki Kaisha, Sakai-ku Sakai-shi, Osaka 590-8522 (JP)
(72) Inventor: YAMAUCHI, Kohei, Sakai City, Osaka 590-8522 (JP); MISUMI, Masaru, Sakai City, Osaka 590-8522 (JP)
(74) Representative: Treeby, Philip David William
(86) International application number: PCT/JP2021/043803
(87) International publication number: WO 2023/100226

(57) **Abstract**

A lamp cover (20) included in a lighting device (15) installed in a storage compartment includes a main body portion (21) including a first surface (21a), a second surface (21b) provided on the opposite side from the first surface (21a), and a bent shape portion (21c). The main body portion (21) includes an incident portion (22) provided at the first surface (21a) and on which light emitted from an LED (16), which serves as a light source, is incident, and an emission portion (23) provided on the opposite side from the incident portion (22) with the bent shape portion (21c) interposed therebetween and from which light incident from the incident portion (22) is emitted.

## Description

### Technical Field

The present invention relates to a lamp cover, a lighting device, and a storage compartment.

### Background Art

In recent years, a technology for mimicking and utilizing various functions of organisms which is so-called biomimetics has gained attention. In addition, Nature Technology (trademark) is known as an example of manufacturing that employs such a biomimetic technology in electrical products and the like.

PTL 1 discloses a refrigerator in which a recessed portion is provided at a cover that covers a cool air duct located at a rear face of a refrigerating chamber, an LED light-emitting element is disposed at the recessed portion, and a lamp cover formed of a light-transmissive resin is disposed in front of the LED light-emitting element. A cross section of the lamp cover taken in the lateral direction is formed in an arc shape, and a protruding portion that diffuses and irradiates light of the LED light-emitting element is formed at a surface of the lamp cover facing the interior of the refrigerating chamber. The lamp cover plays a role of diffusing and then emitting directional light emitted from the LED light-emitting element.

### Citation List

### Patent Literature

PTL 1: JP 2011-117727 A

### Summary of Invention

### Technical Problem

In a storage compartment such as a refrigerator, in order to improve visibility of stored objects, it is preferable to illuminate the interior of the storage compartment with soft light over a wide range of an area. With the lamp cover described in PTL 1, although the light is diffused by providing the protruding portion and the like, it cannot be said that it is sufficient.

An object of one aspect of the present invention is to realize a lamp cover, a lighting device, and a storage compartment capable of illuminating the interior of the storage compartment with soft light over a wide range of an area.

### Solution to Problem

In order to solve the problem described above, a lamp cover according to one aspect of the present invention includes a main body portion including a first surface, a second surface provided on an opposite side from the first surface, and a bent shape portion. The main body portion includes an incident portion provided at the first surface and on which light emitted from a light source is incident, and an emission portion provided on an opposite side from the incident portion with the bent shape portion interposed therebetween, and configured to emit light incident from the incident portion.

A lamp cover according to one aspect of the present invention includes a main body portion including a first surface, a second surface provided on an opposite side from the first surface, and a bent shape portion. The main body portion includes an incident portion provided at the first surface and on which light emitted from a light source is incident, and an emission portion provided at a position intersecting the incident portion at the second surface and from which light incident from the incident portion is emitted.

A lighting device according to one aspect of the present invention includes the lamp cover according to one aspect of the present invention, and a light source configured to emit light.

A storage compartment according to one aspect of the present invention includes the lighting device according to one aspect of the present invention, and a box body including a side wall portion facing the emission portion.

### Advantageous Effects of Invention

According to one aspect of the present invention, it is possible to realize a lamp cover, a lighting device, and a storage compartment capable of illuminating the interior of the storage compartment with soft light over a wide range of an area.

### Brief Description of Drawings

FIG. 1 is a front view of a refrigerator according to a present embodiment.
FIG. 2 is a front view of a refrigerating chamber of the refrigerator illustrated in FIG. 1.
FIG. 3 is a partial cross-sectional perspective view illustrating a left corner portion of the refrigerating chamber of the refrigerator illustrated in FIG. 1 when viewed from a rear wall.
FIG. 4 is a cross-sectional view taken along a line A-A in FIG. 2 in the direction of arrows.
FIG. 5 is an enlarged view of a region A1 illustrated in FIG. 4.
FIG. 6 is a perspective view of a lighting device of the present embodiment provided in the refrigerating chamber of the refrigerator illustrated in FIG. 1.
FIG. 7 is an exploded perspective view of the lighting device illustrated in FIG. 6.
FIG. 8 is an explanatory view illustrating how light travels in the lighting device illustrated in FIG. 6.
FIG. 9 is a perspective view illustrating a first surface side of a lamp cover of the lighting device illustrated in FIG. 6.
FIG. 10 is an enlarged view of a region B2 illustrated in FIG. 9.
FIG. 11 is an explanatory view illustrating a change in a travel path of light caused by an inclined surface of the lamp cover illustrated in FIG. 9.
FIG. 12 is an explanatory view illustrating a change in the travel path of light caused by an inclined surface of a lamp cover according to a modified example.
FIG. 13 is an explanatory view illustrating diffusion of light caused by a first recessed shape of the lamp cover illustrated in FIG. 9.
FIG. 14 is an explanatory view illustrating diffusion of light caused by a first recessed shape of a lamp cover according to a modified example.
FIG. 15 is an enlarged perspective view illustrating a main part of a configuration of a reflecting portion of a case according to a modified example.
FIG. 16 is an explanatory view illustrating a change in the travel path of light caused by the reflecting portion of the case according to the modified example illustrated in FIG. 15.
FIG. 17 is a cross-sectional view illustrating a reflecting portion of a case according to another modified example.
FIG. 18 is an enlarged perspective view illustrating a main part of a second reflecting portion of the case according to the modified example illustrated in FIG. 17.
FIG. 19 is an explanatory view illustrating reflection of light caused by a second recessed shape of the case according to the modified example illustrated in FIG. 17.

### Description of Embodiments

An embodiment of the present invention will be described in detail below. In the present embodiment, a lamp cover of a refrigerator, a lighting device of the refrigerator, and the refrigerator are respectively illustrated as a lamp cover, a lighting device, and a storage compartment according to one aspect of the disclosure. In addition to the refrigerator, the present invention can also be applied to, for example, a heating cooking apparatus including an accommodation chamber, such as a microwave oven or a convection microwave oven, and various types of storage compartments including an accommodation chamber.

### 1. Overview of Refrigerator 1

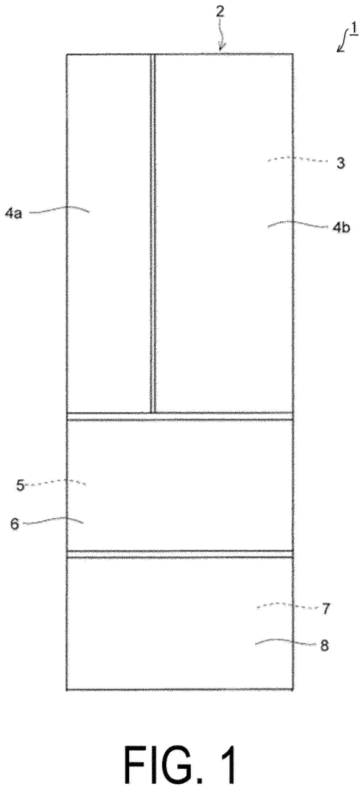

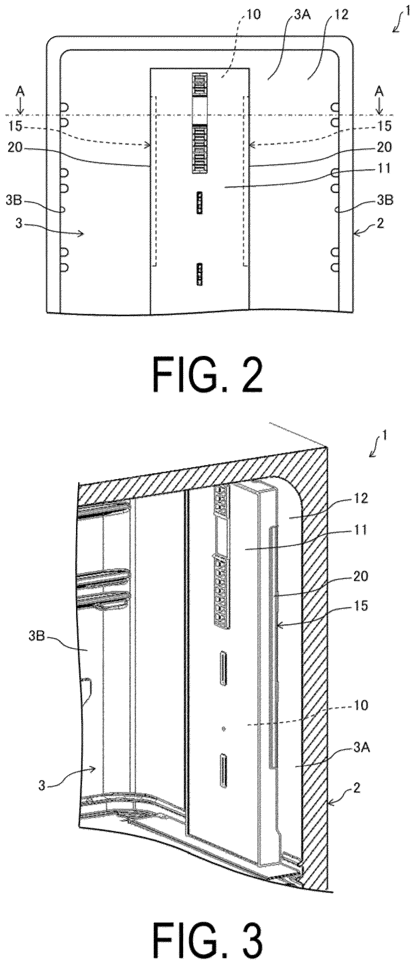

FIG. 1 is a front view of a refrigerator 1 according to the present embodiment. FIG. 2 is a front view of a refrigerating chamber 3 of the refrigerator 1 illustrated in FIG. 1. FIG. 3 is a partial cross-sectional perspective view illustrating a left corner portion of the refrigerating chamber 3 of the refrigerator 1 illustrated in FIG. 1 when viewed from a rear wall 3A.

As illustrated in FIG. 1, the refrigerator 1 includes a box-shaped heat insulating box 2 having an open front face and filled with a heat insulating material. The interior of the heat insulating box 2 is partitioned so that, for example, the refrigerating chamber (box body) 3 is provided in an upper portion thereof, and a freezing chamber 5 and a vegetable chamber 7 are provided in a lower portion thereof. Doors 4a, 4b, 6 and 8 are provided at the front faces of the refrigerating chamber 3, the freezing chamber 5, and the vegetable chamber 7.

As illustrated in FIGS. 2 and 3, a duct (protruding portion) 10 through which cool air passes is provided at a center portion in the left-right direction of the rear wall 3A of the refrigerating chamber 3. The cool air circulating through the duct 10 is discharged into the refrigerating chamber 3 via a discharge port (not illustrated). A food liner 12 made of a resin is provided at the rear wall 3A of the refrigerating chamber 3, and the periphery of the duct 10 is covered with a duct cover 11 made of a resin. Lighting devices 15 that illuminate the interior of the refrigerating chamber 3 are provided on both left and right side walls of the duct 10, respectively. The lighting device 15 has an elongated shape that is long in the up-down direction and short in the front-rear direction.

### 2. Overview of Lighting Device 15

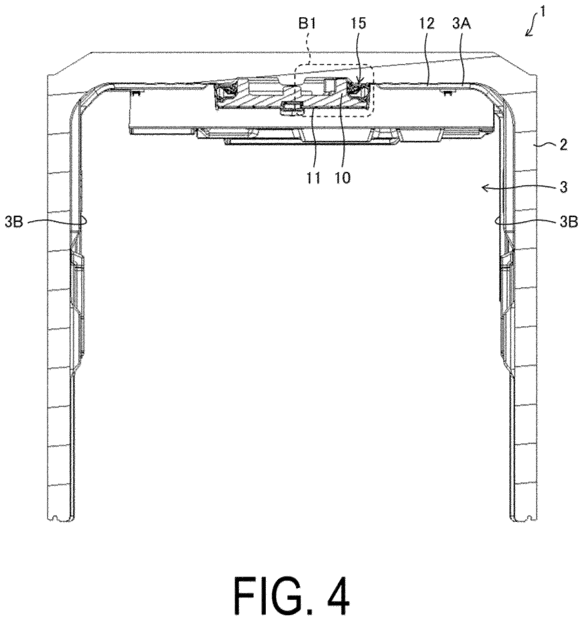

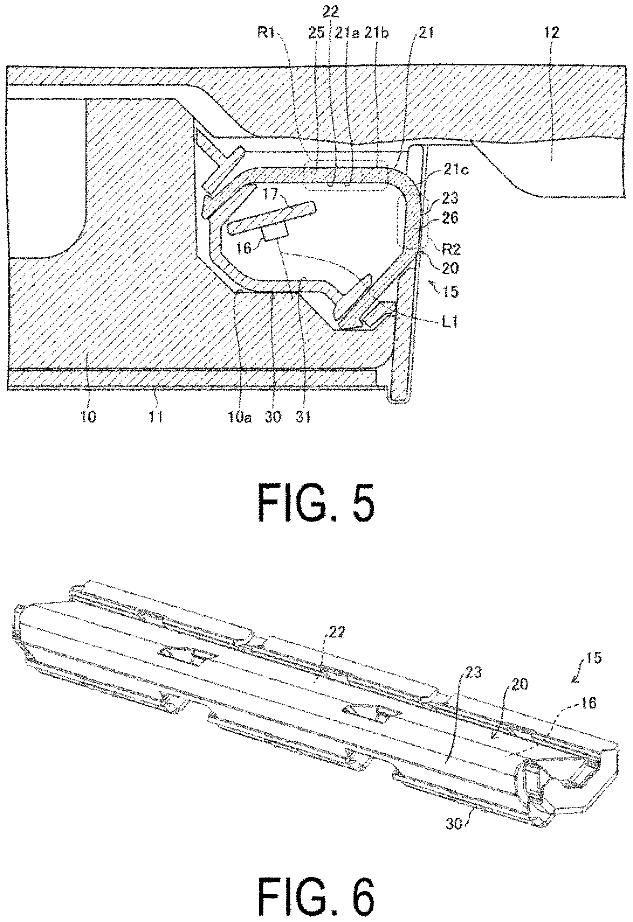

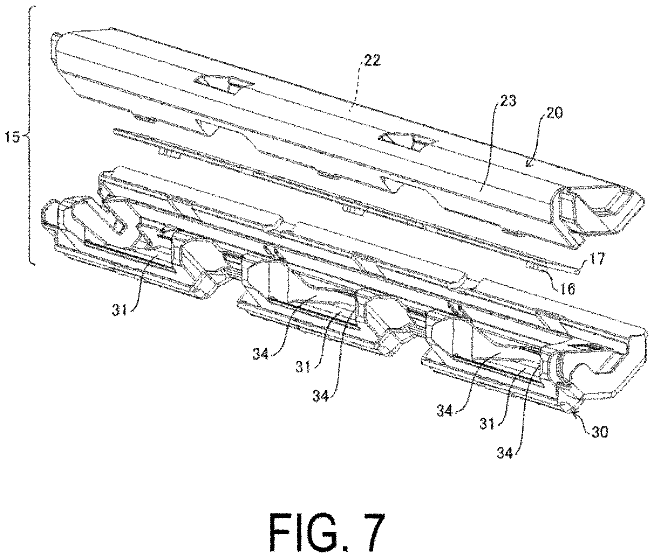

FIG. 4 is a cross-sectional view taken along a line A-A in FIG. 2 in the direction of arrows. FIG. 5 is an enlarged view of a region B1 illustrated in FIG. 4. FIG. 6 is a perspective view of the lighting device 15 of the present embodiment provided in the refrigerating chamber 3 of the refrigerator 1 illustrated in FIG. 1. FIG. 7 is an exploded perspective view of the lighting device 15 illustrated in FIG. 6.

As illustrated in FIGS. 4 and 5, the lighting device 15 is installed at a recessed portion 10a that is long in the up-down direction and provided at a side wall of the duct 10. The lighting device 15 includes a lamp cover 20 and a LED 16 that serves as a light source that emits light. The lamp cover 20 is made of a transparent material such as an acrylic resin, glass, a polystyrene resin, or the like, and diffuses and emits directional light emitted from the LED 16. The lamp cover 20 has a hook-shaped cross section in the lateral direction orthogonal to the longitudinal direction, and is installed so as to face the rear wall 3A and a side wall 3B of the refrigerating chamber 3. In the installed state, an emission portion 23, which will be described later, is exposed from a side wall of the duct 10. The emission portion 23 faces the side wall 3B of the refrigerating chamber 3.

The LED 16 emits light that illuminates the refrigerating chamber 3 (the interior of refrigerating chamber 3). A plurality of the LEDs 16 are disposed at a mounting substrate 17 having an elongated shape, so as to be arranged side by side in the lengthwise direction of the mounting substrate 17. In the present embodiment, three of the LEDs 16 are disposed on the mounting substrate 17 (see FIG. 7).

Further, in the present embodiment, the lighting device 15 includes a reflecting portion 31 that reflects light emitted by the LED 16 and causes the reflected light to be incident on an incident portion 22, which will be described later, of the lamp cover 20. The reflecting portion 31 diffuses and reflects the directional light emitted from the LED 16. In the present embodiment, the reflecting portion 31 is provided at a case 30 fitted to the lamp cover 20. The mounting substrate 17 is attached such that an optical axis L1 of the LED 16 faces the reflecting portion 31. The case 30 is made of a resin molded body or the like having a color, such as white, that reflects light.

By providing the reflecting portion 31, the light emitted from the LED 16 is diffused and reflected by the reflecting portion 31, and then enters the incident portion 22 of the lamp cover 20 (main body portion 21). Therefore, compared with a configuration in which the light emitted from the LED 16 is directly incident on the incident portion 22, it is possible to effectively reduce unevenness of light caused by the position of the LED 16. Further, since the light incident on the incident portion 22 becomes diffused light, the degree of diffusion of the light emitted from the emission portion 23 can also be increased.

Hereinafter, configurations of the lamp cover 20 and the case 30 constituting the lighting device 15 will be described in detail.

### 3. Lamp Cover 20

As illustrated in FIG. 5, the lamp cover 20 of the present embodiment includes a main body portion 21 having a first surface 21a, a second surface 21b provided on the opposite side from the first surface 21a, and a bent shape portion 21c. The main body portion 21 is, for example, a transparent resin molded body.

The main body portion 21 includes the incident portion 22 which is provided at the first surface 21a and on which the light emitted by the LED 16 is incident. Furthermore, the main body portion 21 includes the emission portion 23 which is provided on the opposite side from the incident portion 22 with the bent shape portion 21c interposed therebetween and from which light incident from the incident portion 22 is emitted.

With such a configuration, a distance from the LED 16 to the emission portion 23 can be increased as compared with a configuration in which the emission portion 23 is provided on the second surface 21b side of a region (first region R1) in which the incident portion 22 is provided. Accordingly, the light incident on the incident portion 22 from the LED 16 is diffused before reaching the emission portion 23, and spread light is emitted from the emission portion 23. Therefore, the refrigerating chamber 3 can be illuminated with soft light over a wide area. Further, by forming the lamp cover 20 into a shape including the bent shape portion 21c, it is possible to realize a configuration for emitting the spread light while achieving space-saving.

In the present embodiment, the emission portion 23 is provided at the second surface 21b. Accordingly, compared with a configuration in which the emission portion 23 is provided at the first surface 21a, the degree of freedom of the direction in which the emission portion 23 emits light is improved.

Further, in the present embodiment, the emission portion 23 is provided at a position intersecting the incident portion 22. That is, the emission portion 23 and the incident portion 22 are provided in a positional relationship in which respective extension lines intersect with each other. Accordingly, the degree of freedom of the direction in which the emission portion 23 emits light is improved as compared with a configuration in which the emission portion 23 is provided at a position not intersecting with the incident portion 22, that is, on the same plane.

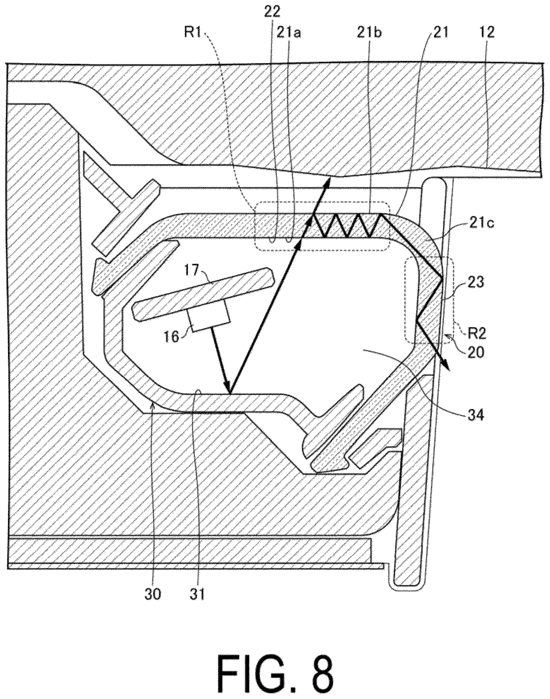

FIG. 8 is an explanatory diagram illustrating how light travels in the lighting device 15 according to the present embodiment. As illustrated in FIG. 8, the light emitted from the LED 16 is reflected by the case 30, and the reflected light enters the interior of the lamp cover 20 (main body portion 21) from the incident portion 22. A part of the light that has entered the interior of the lamp cover 20 is emitted from the second surface 21b as it is, and a part of the light is propagated inside the lamp cover 20. The light propagated inside the lamp cover 20 is repeatedly reflected between the first surface 21a and the second surface 21b, and reaches the emission portion 23 and then is emitted from the emission portion 23. Since the emission portion 23 faces the side wall 3B of the refrigerating chamber 3, light is irradiated toward the side wall 3B of the refrigerating chamber 3 (see FIG. 4). By guiding the light inside the lamp cover 20, the light emitted from the emission portion 23 becomes the spread light as described above.

The main body portion 21 may be configured to include the incident portion 22 which is provided at the first surface 21a and on which the light emitted from the LED 16 is incident, and the emission portion 23 which is provided at a position intersecting the incident portion 22 at the second surface 21b and which emits the light incident from the incident portion 22.

With such a configuration as well, the distance from the LED 16 to the emission portion 23 can be increased as compared with the configuration in which the emission portion 23 is provided on the second surface 21b side of the first region R1 in which the incident portion 22 is provided. Accordingly, the refrigerating chamber 3 can be illuminated with soft light over a wide range of an area. Further, it is possible to realize the configuration for emitting the spread light while achieving the space-saving.

In the present embodiment, the bent shape portion 21c is bent such that the first surface 21a, at which the incident portion 22 is provided, is on the inner side of the bent shape portion 21c. Accordingly, the lamp cover 20 covers (surrounds) the LEDs 16, and the LEDs 16 can be protected by the lamp cover 20.

Specifically, the main body portion 21 has a shape obtained by bending an elongated plate at a center portion in the lateral direction thereof along a direction parallel to the longitudinal direction thereof, and a portion bent at the center portion corresponds to the bent shape portion 21c. The bending line of the bent shape portion 21c is parallel to the longitudinal direction, and the bending angle is about 90 degrees. Both end portions of the main body portion 21 in the lateral direction (end portions extending along the longitudinal direction) are further bent inward. The bending lines of the bent portions at both the end portions of the main body portion 21 in the lateral direction are also parallel to the longitudinal direction, and the bending angles are about 45 degrees.

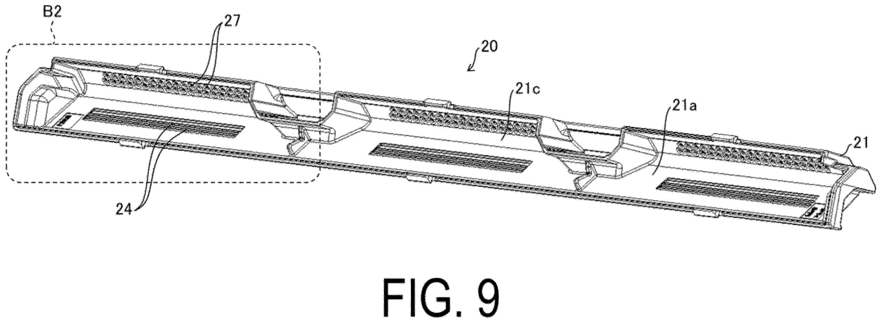

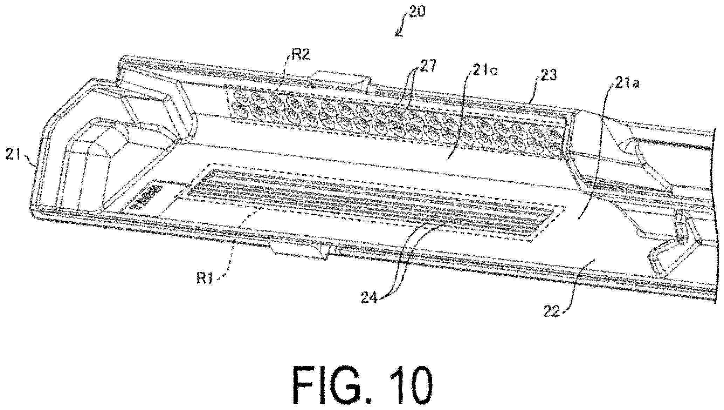

FIG. 9 is a perspective view illustrating the first surface 21a side of the lamp cover 20 of the lighting device 15 illustrated in FIG. 6. FIG. 10 is an enlarged view of a region B2 illustrated in FIG. 9. As illustrated in FIGS. 9 and 10, in the present embodiment, at least one inclined surface 24, which directs the light incident from the incident portion 22 toward the emission portion 23, is formed at the first surface 21a in the first region R1, of the main body portion 21, in which the incident portion 22 is provided. Further, in the present embodiment, at least one first recessed shape 27 having an inner circumferential surface is formed at the first surface 21a in the second region R2, of the main body portion 21, in which the emission portion 23 is provided. As illustrated in FIG. 9, the at least one inclined surface 24 and the at least one first recessed shape 27 are formed at three locations so as to correspond to the three LEDs 16.

### Inclined Surface 24 of Lamp Cover 20

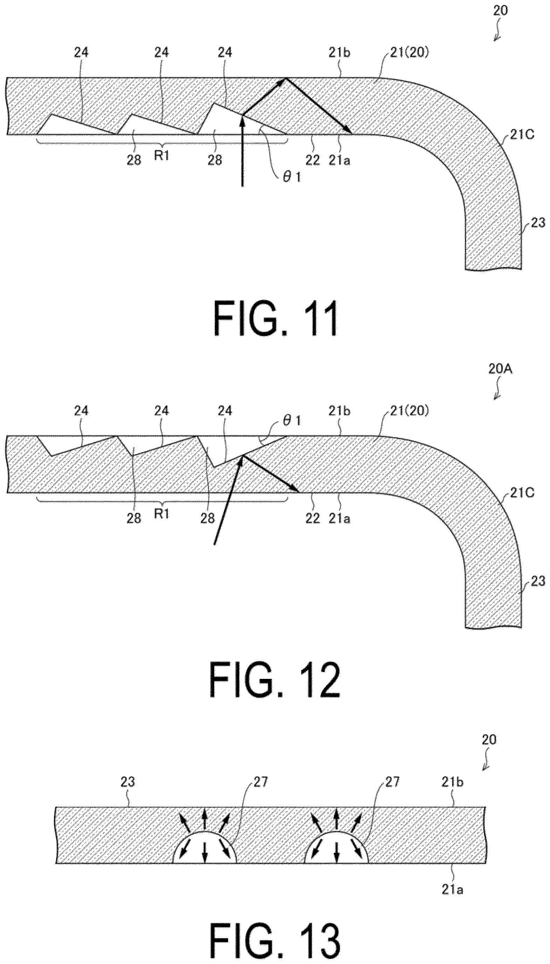

FIG. 11 is an explanatory view illustrating a change in the travel path of light caused by the inclined surface 24 of the lamp cover 20 illustrated in FIG. 9. As illustrated in FIG. 11, the light entering the interior of the lamp cover 20 (main body portion 21) from the incident portion 22 is changed in the direction (travel path) toward the emission portion 23 by the inclined surface 24. The direction in which the light is bent can be adjusted by the inclination of the inclined surface 24.

Although the inclined surface 24 is formed at the first surface 21a of the first region R1 in the present embodiment, the inclined surface 24 may be provided at the second surface 21b of the first region R1 as illustrated in FIG. 12. FIG. 12 is an explanatory view illustrating a change in the travel path of light caused by the inclined surface 24 of a lamp cover 20A according to a modified example. Further, the inclined surfaces 24 may be provided at both the first surface 21a and the second surface 21b of the first region R1 in the lamp cover 20 (main body portion 21). In this manner, by providing the inclined surface 24 in the first region R1 in which the incident portion 22 is provided, it is possible to efficiently guide the light incident on the incident portion 22 to the emission portion 23.

However, by forming the inclined surface 24 at the first surface 21a, which is the inner side with respect to the bending direction of the bent shape portion 21c, the inclined surface 24 can be protected. Note that the inner side with respect to the bending direction of the bent shape portion 21c refers to the inner side of the curve of the bent shape portion 21c.

As illustrated in FIGS. 11 and 12, the inclined surface 24 is preferably provided to be recessed from the first surface 21a or the second surface 21b. With such a configuration, the surface around the recess protects the inclined surface 24, and damage or the like to the inclined surface 24 can be reduced.

Incidentally, light is incident on the incident portion 22 while spreading. Therefore, when attempting to change the direction of light incident on the incident portion 22 by one of the inclined surfaces 24, the inclined surface 24 that is wide is required. In this case, it is necessary to increase the thickness of a portion of the lamp cover 20 at which the inclined surface 24 is provided. In addition, when the inclined surface 24 is formed by a recess, the strength of the lamp cover 20 is reduced because the lamp cover 20 is cut deeply to form the recess.

Therefore, in the present embodiment, a plurality of the inclined surfaces 24 are provided along the direction toward the emission portion 23. With such a configuration, it is possible to change the direction of the light incident on the incident portion 22 while spreading by the plurality of inclined surfaces 24. Accordingly, it is not necessary to increase the thickness of the main body portion 21 in the first region R1 in which the incident portion 22 is provided. Further, even when the inclined surface 24 is formed as the recess, the depth of cut becomes shallow, and the strength of the lamp cover 20 can be secured.

The lighting device 15 can also be expressed as follows. That is, the lighting device 15 is provided at a side portion of the duct 10, which is a protruding portion located at the rear wall 3A inside the refrigerating chamber 3 and protruding toward the front of refrigerating chamber 3 (see FIG. 4). The lamp cover 20 includes a first portion 25 (see FIG. 5) facing the rear wall 3A, a second portion 26 (see FIG. 5) connected to the first portion 25 and facing the side wall 3B of the refrigerating chamber 3, and at least one recessed portion 28 (see FIGS. 11 and 12) formed at a back surface (first surface 21a) of the first portion 25 facing the LED 16 side, or at a front surface (second surface 21b) of the first portion 25 on the opposite side from the back surface. The recessed portion 28 has the inclined surface 24, which changes the direction of light incident on the first portion 25 to a direction traveling to the second portion 26. The recessed portions 28 may be formed at both the back surface (first surface 21a) and the front surface (second surface 21b).

According to the configuration described above, of the light emitted from the LED 16 and incident on the first portion 25 of the lamp cover 20, the light whose direction has been changed by the inclined surface 24 of the recessed portion 28 is emitted from the second portion 26 to the interior of the refrigerating chamber 3. Accordingly, light that is emitted from the first portion 25 toward the rear wall 3A of the refrigerating chamber 3 and that does not essentially contribute to illuminating the interior of the refrigerating chamber 3 can be emitted into the refrigerating chamber 3, and the light emitted by the LED 16 can be efficiently guided into the refrigerating chamber 3.

Further, as illustrated in FIGS. 11 and 12, when a plurality of the inclined surfaces 24 (recessed portions 28) are provided, the inclined surfaces 24 having different inclination angles θ1 may be included. The inclination angle θ1 is an angle formed on the hollow recess side with respect to the first surface 21a or the second surface 21b, which is a formation surface of the inclined surface 24 at which the inclined surface 24 is formed as the recess.

For example, when the inclined surfaces 24 having different intensities of incident light are included, the inclined surface 24 having a higher intensity of incident light may have a larger inclination angle θ1 than the inclined surface 24 having a lower intensity of incident light. According to such a configuration, at the inclined surface 24 at which the intensity of the incident light is high, the direction of light can be significantly changed by the large inclination angle θ1, and the light can be caused to travel in the direction toward the location of the emission portion 23 (second portion 26). On the other hand, at the inclined surface 24 at which the intensity of the incident light is low, the inclination angle θ1 is set to be small and the depth of cut is set to be shallow to secure the thickness. In this way, the strength of the lamp cover 20 is secured. Accordingly, it is possible to secure the strength of the lamp cover 20 while providing the effect of changing the direction of light so as to cause the light to travel to the emission portion 23 (second portion 26).

The inclination angle θ1 may be 10 degrees to 60 degrees. With such a configuration, of the light incident on the incident portion 22 (light incident on the first portion 25), the light emitted toward the rear wall 3A of the refrigerating chamber 3 can be guided to the emission portion 23 (second portion 26).

### First Recessed Shape 27 of Lamp Cover 20

FIG. 13 is an explanatory view illustrating diffusion of light caused by the first recessed shape 27 of the lamp cover 20 illustrated in FIG. 9. As illustrated in FIG. 13, the first recessed shape 27 having the inner circumferential surface is formed to be hollow. Light that has entered from the incident portion 22, has propagated through the interior of the lamp cover 20 (main body portion 21), and has been guided to the emission portion 23 (second portion 26), is incident on the first recessed shape 27 so as to be reflected and refracted in various directions and diffused. Therefore, compared with a configuration in which the first recessed shape 27 is not provided, it is possible to increase the degree of diffusion of light, and it is thus possible to emit more spread light from the emission portion 23.

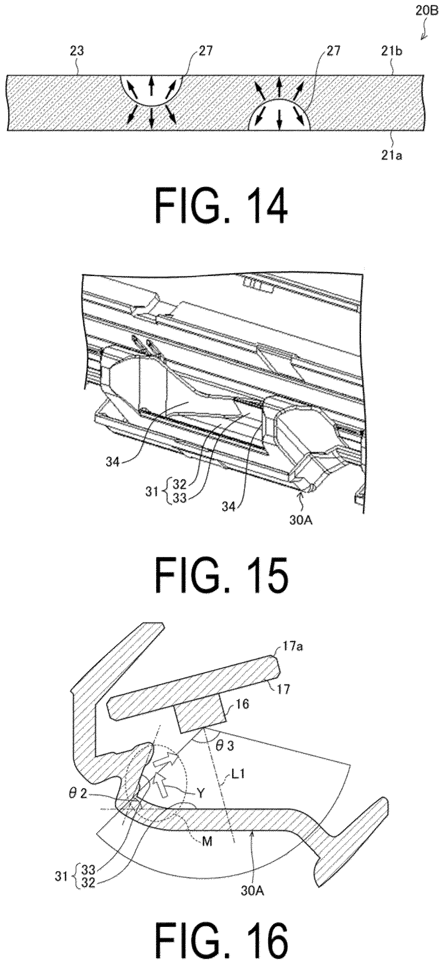

Although the first recessed shape 27 is formed at the first surface 21a of the second region R2 in the present embodiment, the first recessed shape 27 may be provided at the second surface 21b of the second region R2 as illustrated in FIG. 14. FIG. 14 is an explanatory view illustrating diffusion of light caused by the first recessed shape 27 of a lamp cover 20B according to a modified example. Further, the first recessed shapes 27 may be provided at both the first surface 21a and the second surface 21b of the second region R2 in the lamp cover 20 (main body portion 21).

However, when the first recessed shape 27 is formed at the first surface 21a in the second region R2, light intended to be emitted from the first surface 21a to the inner side at which the LED 16 is located can be reflected by the first recessed shape 27 to be directed to the second surface 21b side. Accordingly, an amount of the light emitted from the emission portion 23 to the refrigerating chamber 3 can be increased as compared with a configuration in which the first recessed shape 27 is formed at the second surface 21b in the second region R2.

Further, by providing the first recessed shape 27 at the first surface 21a, which is the inner side with respect to the bending direction of the bent shape portion 21c, the first recessed shape 27 can be protected in a similar manner as when the inclined surface 24 is formed at the first surface 21a, which is the inner side with respect to the bending direction of the bent shape portion 21c.

As illustrated in FIGS. 9 and 10, a plurality of the first recessed shapes 27 may be disposed at an interval smaller than the diameter of one of the first recessed shapes 27, between the first recessed shapes 27. With such a configuration, it is possible to reduce unevenness of light caused by the position of the LED 16. Here, the unevenness of light refers to a situation in which the LED 16 and its periphery are brighter than other sections.

Further, the plurality of first recessed shapes 27 may include a plurality of the first recessed shapes 27 having mutually different inner diameters of the cavities (sizes of the inner circumferential surfaces). According to the configuration described above, since the lamp cover 20 includes the plurality of first recessed shapes 27 having the mutually different inner diameters of the cavities, reflection positions of the light with respect to the planar direction of the lamp cover 20 become various, and the diffusion degree of the light is increased as compared with when the inner diameters of the cavities are the same (uniform). Accordingly, it is possible to more effectively reduce the unevenness of light caused by the position of the light source as compared with a configuration in which all the inner diameters of the cavities are the same.

Further, the plurality of first recessed shapes 27 may include a plurality of the first recessed shapes 27 having mutually different depths of the cavities. According to the configuration described above, since the lamp cover 20 includes the plurality of first recessed shapes 27 having the mutually different depths of the cavities, the reflection positions of the light with respect to the thickness direction of the lamp cover 20 are changed, and the diffusion degree of the light is increased as compared with when the depths of the cavities are the same. Accordingly, it is possible to more effectively reduce the unevenness of light caused by the position of the light source as compared with a configuration in which all the depths of the cavities are the same.

The first recessed shape 27 may be hemispherical. That is, the shape of the cavity is hemispherical. Accordingly, the first recessed shape 27 softly glows. Further, an effect is also obtained that processing to form the first recessed shape 27 becomes easier.

### 4. Case 30

As illustrated in FIG. 7, the case 30 includes three of the reflecting portions 31 corresponding to three of the LEDs 16. As illustrated in FIG. 5, the reflecting portion 31 is provided at a position through which the optical axis L1 of the LED 16 passes. The optical axis L1 of the LED 16 is inclined to the duct 10 side, which is the opposite side from the emission portion 23 side, with respect to the normal line of a main surface of the reflecting portion 31. Accordingly, strong light reflected by the reflecting portion 31 and passing through the optical axis L1 can be caused to be incident on the incident portion 22 of the lamp cover 20.

FIG. 15 is an enlarged perspective view illustrating a main part of a configuration of the reflecting portion 31 of a case 30A according to a modified example. FIG. 16 is an explanatory view illustrating a change in the travel path of light caused by the reflecting portion 31 of the case 30A according to the modified example illustrated in FIG. 15. As illustrated in FIGS. 15 and 16, the reflecting portion 31 may include a first reflecting portion 32 provided at a position through which the optical axis L1 of the LED 16 passes, and a second reflecting portion 33 provided so as to intersect the first reflecting portion 32.

With such a configuration, of the light reflected by the first reflecting portion 32, light indicated by an arrow Y, which is not directed to either the incident portion 22 or the emission portion 23, is reflected by the second reflecting portion 33 and enters the incident portion 22 or the emission portion 23. Accordingly, the light emitted from the LED 16 is effectively incident on the lamp cover 20 to contribute to the illumination of the interior of the refrigerating chamber 3.

An angle formed on the LED 16 side by the second reflecting portion 33 with respect to an extension plane of a portion of the first reflecting portion 32, through which the optical axis L1 of the LED 16 passes, is defined as an inclination angle θ2 of the second inclined portion. The inclination angle θ2 can be set to 45 degrees to 135 degrees. With such a configuration, the light which is not directed to either the incident portion 22 or the emission portion 23 can be incident on the incident portion 22 or the emission portion 23. Further, the inclination angle θ2 may be an acute angle, that is, the second reflecting portion 33 and the first reflecting portion 32 may intersect at an acute angle.

Furthermore, as illustrated in FIG. 16, the second reflecting portion 33 may be positioned outside a half-value angle θ3 of the LED 16. Accordingly, light outside the half-value angle can be caused to be incident on the lamp cover 20 without blocking the optical path of bright light within the half-value angle.

Further, in the present embodiment, third reflecting portions 34 are provided on both sides of the reflecting portion 31 in the longitudinal direction. The third reflecting portion 34 rises from the reflecting portion 31 and is inclined so as to approach the emission portion 23 as it moves away from the LED 16. The third reflecting portion 34 reflects light traveling in a direction different from the direction toward the emission portion 23, and directs the light toward the emission portion 23.

### Second Recessed Shape 35 of Case 30

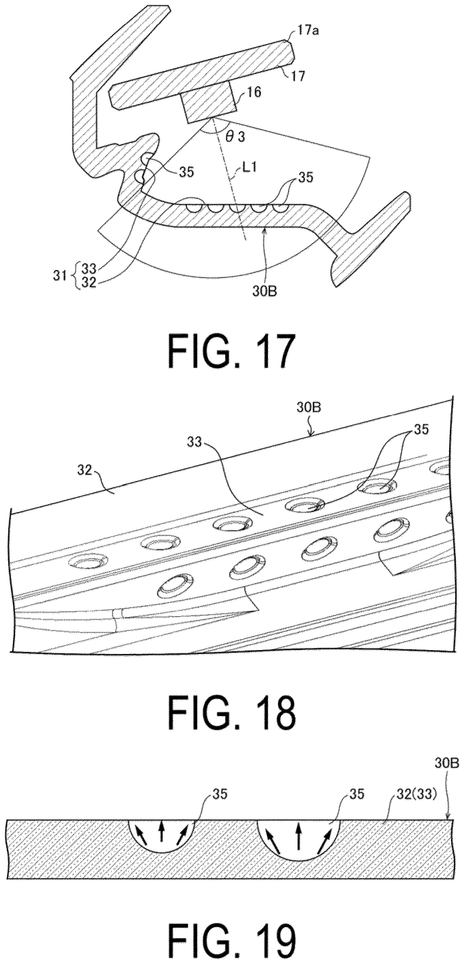

FIG. 17 is a cross-sectional view illustrating the reflecting portion 31 of a case 30B according to another modified example. FIG. 18 is an enlarged perspective view illustrating a main part of the second reflecting portion 33 of the case 30B according to the modified example illustrated in FIG. 17. As illustrated in FIGS. 17 and 18, in the reflecting portion 31 of the case 30B of the modified example, at least one second recessed shape 35 having an inner circumferential surface is formed at each of the first reflecting portion 32 and the second reflecting portion 33. The interior of the second recessed shape 35 having the inner circumferential surface is formed to be hollow. Note that the at least one second recessed shape 35 having the inner circumferential surface may be formed at one of the first reflecting portion 32 and the second reflecting portion 33.

FIG. 19 is an explanatory view illustrating reflection of light caused by the second recessed shape 35 of the case 30B according to the modified example illustrated in FIG. 17. As illustrated in FIG. 19, the light irradiated by the first reflecting portion 32 and the second reflecting portion 33 is reflected by the second recessed shapes 35 to be reflected in various directions and diffused. Therefore, compared with a configuration in which the second recessed shape 35 is not provided, it is possible to increase the degree of diffusion of light, and it is thus possible to reflect more spread light.

In particular, the second recessed shape 35 may be provided in a region located inside the half-value angle θ3 of the LED 16. Since the light intensity is high in the region inside the half-value angle, the diffusion effect can be enhanced by the second recessed shape 35 being present inside the half-value angle.

Further, the plurality of second recessed shapes 35 may include a plurality of the second recessed shapes 35 having mutually different inner diameters of the cavities (sizes of the inner circumferential surfaces). According to the configuration described above, since the plurality of second recessed shapes 35 having the mutually different inner diameters of the cavities are included, reflection positions of light in the planar direction of the case 30B become various, and the diffusion degree of the light is increased as compared with when the inner diameters of the cavities are the same (uniform). Accordingly, it is possible to more effectively reduce the unevenness of light caused by the position of the light source as compared with a configuration in which all the inner diameters of the cavities are the same.

Further, the plurality of second recessed shapes 35 may include a plurality of the second recessed shapes 35 having mutually different depths of the cavities. According to the configuration described above, since the plurality of second recessed shapes 35 having the mutually different depths of the cavities are included, the reflection positions of light in the thickness direction of the case 30B are changed, and the diffusion degree of the light is increased as compared with when the depths of the cavities are the same. Accordingly, it is possible to more effectively reduce the unevenness of light caused by the position of the light source as compared with a configuration in which all the depths of the cavities are the same.

The second recessed shape 35 may be hemispherical. That is, the shape of the cavity is hemispherical. Accordingly, the second recessed shape 35 softly reflects light. Further, an effect is also obtained that processing to form the second recessed shape 35 becomes easier.

### Supplement

A lamp cover according to a first aspect of the present invention includes a main body portion including a first surface, a second surface provided on an opposite side from the first surface, and a bent shape portion. The main body portion includes an incident portion provided at the first surface and on which light emitted from a light source is incident, and an emission portion provided on an opposite side from the incident portion with the bent shape portion interposed therebetween, and configured to emit light incident from the incident portion.

With respect to the first aspect described above, in a lamp cover according to a second aspect of the present invention, the emission portion may be provided at the second surface.

With respect to the first or second aspect of the present invention, in a lamp cover according to a third aspect of the present invention, the emission portion may be provided at a position intersecting the incident portion.

A lamp cover according to a fourth aspect of the present invention includes a main body portion including a first surface, a second surface provided on an opposite side from the first surface, and a bent shape portion. The main body portion includes an incident portion provided at the first surface and on which light emitted from a light source is incident, and an emission portion provided at a position intersecting the incident portion at the second surface and from which light incident from the incident portion is emitted.

With respect to any one of the first to fourth aspects, in a lamp cover according to a fifth aspect of the present invention, at least one inclined surface may be formed at the first surface or at the second surface in a first region in which the incident portion is provided, the inclined surface directing the light incident from the incident portion toward the emission portion.

With respect to the fifth aspect, in a lamp cover according to a sixth aspect of the present invention, the inclined surface may be recessed from the first surface or the second surface.

With respect to the fifth or sixth aspect, in a lamp cover according to a seventh aspect of the present invention, a plurality of the inclined surfaces may be provided along a direction toward the emission portion.

With respect to any one of the first to seventh aspects, in a lamp cover according to an eighth aspect of the present invention, the bent shape portion may be bent with the first surface being on an inner side of the bent shape portion.

With respect to the eighth aspect according to any one of the fifth to seventh aspects, in a lamp cover according to a ninth aspect of the present invention, the inclined surface may be formed at the first surface.

With respect to any one of the first to ninth aspects, in a lamp cover according to a tenth aspect of the present invention, at least one first recessed shape having an inner circumferential surface may be formed at the first surface or at the second surface in a second region in which the emission portion is provided.

With respect to the tenth aspect, in a lamp cover according to an eleventh aspect of the present invention, the first recessed shape may be formed at the first surface in the second region.

A lighting device according to a twelfth aspect of the present invention includes the lamp cover according to any one of the first to eleventh aspects, and a light source (LED 16) configured to emit light.

With respect to the twelfth aspect, a lighting device according to a thirteenth aspect of the present invention may further include a reflecting portion configured to reflect the light emitted by the light source and to cause the reflected light to be incident on the incident portion.

With respect to the thirteenth aspect, in a lighting device according to a fourteenth aspect of the present invention, the reflecting portion may include a first reflecting portion provided at a position through which an optical axis of the light source passes, and a second reflecting portion provided intersecting the first reflecting portion.

With respect to the fourteenth aspect, in a lighting device according to a fifteenth aspect of the present invention, the second reflecting portion may be located outside a half-value angle of the light source.

With respect to the fourteenth or fifteenth aspect, in a lighting device according to a sixteenth aspect of the present invention, the second reflecting portion and the first reflecting portion may intersect each other at an acute angle.

With respect to any one of the thirteenth to sixteenth aspects, in a lighting device according to a seventeenth aspect of the present invention, the reflecting portion may include at least one second recessed shape having an inner circumferential surface.

A storage compartment (refrigerator 1) according to an eighteenth aspect of the present invention includes the lighting device according to any one of the twelfth to seventeenth aspects, and a box body (refrigerating chamber 3, heat insulating box 2) including a side wall portion (side wall 3B) facing the emission portion.

Note that the disclosure includes a technical idea deriving from a focus on the hollow structure of the hair of the polar bear. Furthermore, the disclosure includes a technical idea deriving from a focus on the shape of the comb plate of the comb jellyfish. In other words, the disclosure relates to biomimetics.

The present invention is not limited to each of the above-described embodiments. It is possible to make various modifications within the scope of the claims. An embodiment obtained by appropriately combining technical elements disclosed in different embodiments falls also within the technical scope of the disclosure. Further, technical elements disclosed in the respective embodiments may be combined to provide a new technical feature.

### Reference Signs List

1 Refrigerator
2 Heat insulating box
3 Refrigerating chamber
3A Rear wall
3B Side wall
10 Duct
10a Recessed portion
15 Lighting device
16 LED (light source)
17 Mounting substrate
20, 20A, 20B Lamp cover
21 Main body portion
21a First surface
21b Second surface
21c Bent shape portion
22 Incident portion
23 Emission portion
24 Inclined surface
27 First recessed shape
30, 30A, 30B Case
31 Reflecting portion
32 First reflecting portion
33 Second reflecting portion
34 Third reflecting portion
35 Second recessed shape
L1 Optical axis
R1 First region
R2 Second region
θ1, θ2 Inclination angle
θ3 Half-value angle

## Claims

1. A lamp cover comprising:
a main body portion including a first surface, a second surface provided on an opposite side from the first surface, and a bent shape portion,
wherein the main body portion includes
an incident portion provided at the first surface and on which light emitted from a light source is incident, and
an emission portion provided on an opposite side from the incident portion with the bent shape portion interposed therebetween, and configured to emit light incident from the incident portion.

2. The lamp cover according to claim 1,
wherein the emission portion is provided at the second surface.

3. The lamp cover according to claim 1 or 2,
wherein the emission portion is provided at a position intersecting the incident portion.

4. A lamp cover comprising:
a main body portion including a first surface, a second surface provided on an opposite side from the first surface, and a bent shape portion,
wherein the main body portion includes
an incident portion provided at the first surface and on which light emitted from a light source is incident, and
an emission portion provided at a position intersecting the incident portion at the second surface and from which light incident from the incident portion is emitted.

5. The lamp cover according to any one of claims 1 to 4,
wherein at least one inclined surface is formed at the first surface or at the second surface in a first region in which the incident portion is provided, the inclined surface directing the light incident from the incident portion toward the emission portion.

6. The lamp cover according to claim 5,
wherein the inclined surface is recessed from the first surface or the second surface.

7. The lamp cover according to claim 5 or 6,
wherein a plurality of the inclined surfaces are provided along a direction toward the emission portion.

8. The lamp cover according to any one of claims 1 to 7,
wherein the bent shape portion is bent with the first surface being on an inner side of the bent shape portion.

9. The lamp cover according to claim 8 according to any one of claims 5 to 7,
wherein the inclined surface is formed at the first surface.

10. The lamp cover according to any one of claims 1 to 9,
wherein at least one first recessed shape having an inner circumferential surface is formed at the first surface or at the second surface in a second region in which the emission portion is provided.

11. The lamp cover according to claim 10,
wherein the first recessed shape is formed at the first surface in the second region.

12. A lighting device comprising:
the lamp cover according to any one of claims 1 to 11; and
a light source configured to emit light.

13. The lighting device according to claim 12, further comprising:
a reflecting portion configured to reflect the light emitted by the light source and to cause the reflected light to be incident on the incident portion.

14. The lighting device according to claim 13,
wherein the reflecting portion includes a first reflecting portion provided at a position through which an optical axis of the light source passes, and a second reflecting portion provided intersecting the first reflecting portion.

15. The lighting device according to claim 14,
wherein the second reflecting portion is located outside a half-value angle of the light source.

16. The lighting device according to claim 14 or 15,
wherein the second reflecting portion and the first reflecting portion intersect each other at an acute angle.

17. The lighting device according to any one of claims 13 to 16,
wherein the reflecting portion includes at least one second recessed shape having an inner circumferential surface.

18. A storage compartment comprising:
the lighting device according to any one of claims 12 to 17; and
a box body including a side wall portion facing the emission portion.
